# EUROPÄISCHE PATENTSCHRIFT

(11) **EP 1 523 391 B1**
(45) Veröffentlichungstag und Bekanntmachung des Hinweises auf die Patenterteilung: **02.04.2008**
(21) Anmeldenummer: 03764834.2
(22) Anmeldetag: 07.07.2003
(51) Int. Cl.: B23B 27/14

(54) **SCHNEIDEINSATZ MIT HAUPT- UND SCHLICHTSCHNEIDE**
CUTTING INSERT COMPRISING A MAIN BLADE AND A FINISHING BLADE
PLAQUETTE DE COUPE DOTEE D'UNE ARETE COUPANTE PRINCIPALE ET D'UNE ARETE COUPANTE DE FINITION

(30) Priorität: 18.07.2002 AT 4832002 U
(43) Veröffentlichungstag der Anmeldung: 20.04.2005
(73) Patentinhaber: CERATIZIT Austria Gesellschaft m.b.H., 6600 Reutte /Tirol (AT)
(72) Erfinder: ROFNER, Rudolf, AT-6611 Heiterwang (AT); URSCHITZ, Harald, A-6600 Breitenwang (AT)
(86) Internationale Anmeldenummer: PCT/AT2003/000188
(87) Internationale Veröffentlichungsnummer: WO 2004/009275

(56) Entgegenhaltungen:
- EP-A- 0 492 631
- EP-A- 0 962 272
- US-A- 5 758 994
- US-A- 5 921 722

## Beschreibung

Die Erfindung betrifft einen Schneideinsatz zum Drehen unter zur Werkstückachse fixer Werkzeugzustellrichtung gemäß dem Oberbegriff des Anspruchs 1. Der Schneideinsatz mit oberer und unterer Deckfläche und diese begrenzenden, ebenen Seitenflächen, die in den Schneidecken eine Eckenwinkel α ≤ 90° bilden, weist mindestens auf einer Deckfläche eine gerade Hauptschneide und in den Schneidecken innerhalb einzelner Abschnitte unterschiedlich gekrümmte Eckenschneidkanten mit an die Schneidkante anschließender, umlaufender, zum Mittelpunkt des Schneideinsatzes hin abfallender Spanleitstufe auf und zeichnet sich weiterhin durch bis in die Spanleitstufe hineinreichende Noppen mit in der Deckfläche unterschiedlich orientierter Streckrichtung aus. Ein solcher Schneideinsatz ist aus dem Dokument EP-A-0962272 bekannt.

Die Oberflächengüte eines Werkstückes bezüglich Rauhigkeit Rₐ ist, neben anderen Faktoren, systembedingt von den Schnittbedingungen beim Drehen, insbesondere vom Werkzeugvorschub und der Spantiefe abhängig. Große Spantiefe und hoher Vorschub erlauben ein wirtschaftliches Zerspanen des Werkstückes auf Kosten der Oberflächenqualität. Beim Längsdrehen bleiben Rillen mehr oder minder großer Rauhigkeitstiefe auf der Werkstückoberfläche sichtbar. Üblicherweise wird daher beim Zerspanen an den Arbeitsgang des Grobzerspanens ein Arbeitsgang des Schlichtens bei sehr kleiner Spantiefe und geringem Vorschub zwecks Verbesserung der Werkstückoberflächengüte angeschlossen.
Zur Einsparung eines eigenen Schlichtarbeitsgang werden auch solche Schneideinsätze angeboten, die ein grobes Zerspanen mit der Hauptschneide und während desselben Arbeitsganges gleichzeitig ein Schlichten mit einer Schlichtschneide erlauben.
Ein für diesen Zweck ausgestalteter Schneideinsatz ist in der WO 95/32071 beschrieben. Konkrete Aufgabenstellung dieses Patentes ist eine Verbesserung der Werkstückoberfläche und gleichzeitig eine Reduzierung der Empfindlichkeit der Oberflächenqualität von einer exakt eingehaltenen Soll-Zustellrichtung des Werkzeuges zum Werkstück. Während bis dahin Schneideinsätze mit einer bestimmten, meist genormten Verrundung der Schneidkanten im Eckenbereich gefertigt wurden, weist der Schneideinsatz gemäß jener Erfindung einen Eckenbereich mit fünf aneinander grenzenden Segmenten unterschiedlichen Kantenradien auf. Das angestrebte Ziel hoher Oberflächengüte wird erreicht, in dem beim Schneiden neben der Hauptschneide gleichzeitig einzelne Segmente des Schneidkanteneckenbereiches über die Winkelhalbierende hinaus zum Einsatz kommen. Der als Schlichtschneide funktionstüchtige Kantenbereich ist kurz, verglichen mit der möglichen Einsatzlänge der Hauptschneide. Entsprechend ist die Wirkung der Schlichtschneide und damit die insgesamt erzielbare Rauhigkeitsverbesserung der Werkstückoberfläche durch gleichzeitiges Schlichten beim Längsdrehen sehr begrenzt.
Schneideinsätze (mit Schneideckenwinkeln < 90°) werden in der Regel für Kopiervorgänge eingesetzt, d.h. es werden in einem Arbeitsgang Werkstückoberflächen verschiedener Winkelausrichtungen in Bezug auf die Werkstücklängsachse gedreht. Zum Kopierdrehen kommt häufig ein Freidrehen.
Die Ausgestaltung der Schneidsätze gemäß obiger, älterer Patentanmeldung führt beim Kopierdrehen zwangsläufig zu einer Profilverzerrung. Es können, verglichen mit Standardwendeschneidplatten, keine zeichnungsgerechten Eckenradien gefertigt werden. Ersatzweise müssen die Parameter für die Zustellbewegung des Schneidwerkzeuges zur Abwendung andernfalls auftretenden Maßabweichungen aufwändig korrigiert werden.

An einen Schneideinsatz zum Grobzerspanen und zum zeitgleichen Schlichten werden besonders hohe Anforderungen hinsichtlich Spanformung und Spanabfuhr gestellt. Grund dafür ist die Gefahr, dass der bei der Grobzerspanung gebildete Span den Schlichtprozess und damit die Qualität der Werkstückoberfläche nachteilig beeinflusst, sei es durch Riefen auf der Werkstückoberfläche infolge auf ihr auflaufender, grober Späne, oder auch infolge Beschädigung der Schlichtschneide durch an der Hauptschneidkante gebildete Späne.
Der Schneideinsatz gemäß vorgenannter WO 95/32071 weist für die Spanformung und -abfuhr eine spezifische Noppenausbildung im Deckflächenbereich auf, die indes allenfalls mäßige Wirkung und diese nur für sehr kurze Späne im Eckenbereich der Hauptschneide zeigt.

Fortschritte in der Zerspanungstechnik waren in den zurückliegenden Jahren eng mit der Entwicklung von Maßnahmen verbunden, mittels derer sich die Spanbildung und deren Ableitung von der Schneidkante verbessern ließen, sei es über eine Verringerung der Schnittkräfte, über die Form der Spanbildung oder über die Richtung, in der die gebildeten Späne abgelenkt und von der Schneidspitze entfernt werden. Neben verschiedenartigen Ausformungen von Spanmulden, bzw. Spanleitstufen, haben die Ausbildung von Mulden oder Noppen, in oder in unmittelbarer Nähe der Spanleitstufen, zu Verbesserungen geführt.
Neben der bereits oben zitierten WO 95/32071 werden als weitere Beispiele für derartige Entwicklungen genannt, zum einen die EP 0 207 912 B1, mit asymmetrisch ausgebildetem Spanbrecher in einem abgerundeten Vorderabschnitt der Schneideinsatzdeckfläche, weiters das Gebrauchsmuster G 92 15 855, mit einer speziellen Doppelnut und zusätzlich noppenartigen Spanformelementen in der Spanleitstufe eines Schneideinsatzes und auch die DE 42 39 236 C2, welche einen Schneideinsatz mit längsgestreckten, rippenförmigen Spanformelementen unterschiedlicher Orientierung in der Deckfläche aufweist.
Bei allen vorgenannten Schneideinsätzen nach dem Stand der Technik ist die Schneidkanten selbst, in Seitenansicht gesehen, durchgehend waagrecht zur Grundseite bzw. zur Auflagefläche des Schneideinsatzes in der Werkzeughalterausnehmung ausgerichtet.

Die Aufgabe vorliegender Erfindung besteht darin, aufbauend auf dem vorgenannten Stand der Technik mit den geschilderten Nachteilen einen Schneideinsatz zu schaffen, der bei zeitgleicher Verwendung von Haupt- und Schlichtschneide Werkstücke hoher Oberflächengüte bzw. kleiner Rauhigkeit ergibt. Der Schneideinsatz soll vornehmlich für die Bearbeitung weicher und zäher Werkstoffe wie Aluminium, Buntmetaffe und auch verschiedener Kunststoffarten verwendbar sein. Mit dem zu schaffenden Schneideinsatz soll ein gegenüber dem Stand der Technik wirtschaftlicheres, kostengünstigeres Zerspanen möglich sein, d.h. ungeachtet eines gleichzeitigen Grob- und Schlichtzerspanens mit vergleichsweise großer Spantiefe und großem Werkzeugvorschub soll eine verbesserte Werkstück-Oberflächenqualität erreicht werden. Dazu soll die nutzbare Länge der Schlichtschneide gegenüber bekannten Ausführungen vergrößert werden, ohne die bisher üblichen Maßabweichungen am Werkstück in Kauf nehmen zu müssen oder alternativ diesen Nachteil mittels aufwendiger Korrektur der Schneidwerkzeugzuführung kompensieren zu müssen.

Diese Aufgabe wird erfindungsgemäß durch einen Schneideinsatz zum Drehen der eingangs genannten Art erreicht, welcher die erfindungsgemäßen Merkmale entsprechend kennzeichnendem Teil von Anspruch 1 aufweist. Vorteilhafte Ausführungen sind in den Unteransprüchen beschrieben.
Der Schneideinsatz gemäß Erfindung weist bezüglich Werkstück-Oberflächengüte und Erweiterbarkeit der Zerspanungsbedingungen auf vergleichsweise grobe, breite Späne und großen Werkzeugvorschub sprunghaft verbesserte Ergebnisse auf. Der Zerspanungsprozess ist wirtschaftlicher durchführbar. Dies wird weiter unten mittels der Ergebnisse aus Vergleichstests näher belegt.

Eine eingehende Prüfung und Auswertung von Spanform, Spanlänge und Ablaufrichtung des Spanes für eine große Variationsbreite der Schnittwerte bezüglich Spantiefe und Werkzeugvorschub, einmal ermittelt an Schneideinsätzen gemäß Erfindung und zum anderen an typgleichen Schneideinsätzen ohne die Erfindungsmerkmale, ergibt eine höchst vorteilhafte charakteristische Ausgestaltung der Späne im Falle der erfinderischen Schneideinsätze. Daraus lassen sich die insgesamt vorteilhaften Leistungsdaten der Schneideinsätze gemäß Erfindung für den Fachmann nachvollziehen.

Der Begriff Schneideinsatz umfasst erfindungsgemäß Ausführungen mit drei und mehr Ecken, wobei nicht alle Ecken auch zwingend Schneidecken sind.
Letzteres trifft beispielsweise für rhombische Schneideinsätze gemäß nachfolgender Figuren zu. Der Schneideinsatz kann in Bezug auf die Ausrichtung der Seitenflächen neutral oder positiv sein, d.h. er besitzt Schneidkanten auf einer oder auf beiden Deckflächen. Die Seitenflächen sind eben, ausgenommen die Abschnitte in den Schneideckenbereichen. Im Begriff eben ist eingeschlossen, dass in Aufsicht, die Kanten zwischen Deck- und Seitenfläche zumindest im Bereich der als Schneidkante verwendbaren Hauptschneide gerade ausgeführt sind - siehe auch Ausführungen entsprechend der Figuren. Die mit oder ohne Fasenausbildung an die Schneidkanten angrenzenden Spanleitstufen sind auf der Deckfläche umlaufend ausgestaltet, zumindest aber kontinuierlich in dem als Schneidkante verwendeten Bereich beidseitig der Symmetrieebene zu einer Schneidecke. Die Spanleitstufen können im Profil gerade oder gekrümmt ausgestattet sein und sind je nach dem zu bearbeitendem Werkstoff gegen das Einsatzinnere, bzw. gegen die Schneideinsatz-Auflagefläche hin unter größerem oder kleinerem konstanten oder sich ändernden Winkel geneigt.

Die Schneidkanten von Schneideinsätzen nach dem bekannten Stand der Technik verlaufen, in Seitenansicht, durchgehend waagrecht, d.h. parallel zu ihrer Auflagefläche, oder aber von der Schneidecke aus längs der aktiv nutzbaren Schneidkantenlänge zur Mitte eines Schneideinsatzes hin unter gleichbleibendem, oder alternativ unter stetig abnehmendem Winkel in Bezug auf die Auflagefläche. Demgegenüber sind die Schneidkanten der erfindungsgemäßen Schneideinsätze in der Schneidecke, d.h. im Bereich der einzelnen Abschnitte der Schneidecke, waagrecht und fallen in den an die Schneidecken anschließenden Kantenbereichen der nutzbaren Hauptschneide unter konstantem Winkel, oder unter sich bezüglich der Auflagefläche stetig veränderndem Winkel in Richtung Mitte einer Seitenfläche hin ab.

Die Spanleitstufe einer Deckfläche mündet kontinuierlich oder auch sprunghaft in einen gegenüber der Spanleitstufe erhabenen Schneideinsatz-Zentralbereich ein. Der Zentralbereich weist regelmäßig ein Loch zur Befestigung des Schneideinsatzes mittels einer Spannschraube im Werkzeuggrundhalter auf. Unter dem Begriff Noppe gemäß Anspruchsmerkmal sind einzelne, sich über die Spanleitstufe und den Zentralbereich erstreckende, rippen- oder höckerförmige Ausbuchtungen in der Deckfläche zu verstehen. Die Höcker können kontinuierlich fließende Formen oder auch Formen mit mehreren, durch Kanten gegeneinander abgesetzte Flächen aufweisen. Erfindungswesentlich ist, dass einzelne Noppen eine markante Längsstreckung besitzen und in der Deckfläche unterschiedlich orientiert sind. Die Noppen überdecken mit einem Teil ihrer Fläche den Zentralbereich der Deckfläche und reichen zwingend in den Bereich der Spanleitstufen hinein. Für die Erfüllung der erfindungsgemäßen Aufgabe ist die Ausgestaltung der, einer Schneidecke nächstliegende Noppe laut Anspruchsmerkmal maßgebend.
Der Inkreis bzw. Inkreisdurchmesser eines Schneideinsatzes ist ein häufig verwendetes Standardmaß für Schneideinsätze und versteht sich als der Durchmesser desjenigen Kreises, in Aufsicht auf den Schneideinsatz, welcher mit dem Schneideinsatz bzw. den Seitenflächen tangiert.
Das erfindungswesentliche Merkmal , Abschnitt B gleich 1,5 - 15 % des Schneideinsatz-Inkreisdurchmessers besagt dem Fachmann, dass es sich bei der Schlichtschneide gemäß Abschnitt B, im Unterschied zu bekannten Schneideinsätzen mit Segmenten unterschiedlich gekrümmter Eckenschneidkanten, um eine Schlichtschneide vergleichsweise großer Länge handelt, welche Länge markant über den bekannten, bisher realisierten Werten liegt und die bisher für den Fachmann als nicht praktisch nutzbar angesehen wurde. Das ist umso bedeutsamer, als auch schon bisher die Verwendung einer möglichst langen Schlichtschneide als Vorteil erkannt worden war.
Ein Grund für den Vorbehalt zur Ausgestaltung einer langen Schlichtschneide entsprechend der Erfindung war die Erfahrungen des Fachmannes, dass bereits Schlichtschneiden entsprechend dem Stand der Technik beim Kopierdrehen (von zur Werkstücklängsachse unterschiedlich ausgerichteten Werkstückflächen) in Anwendung üblicher Schnittdatenvorgabe zu nicht mehr tolerierbaren Maßabweichungen bzw. Profilverzerrungen am Werkstück führen, oder alternativ einen nicht mehr vertretbar großen Korrekturaufwand bei der Werkzeugzugstellung bedürfen.
Ein zweiter, ebenso wichtiger Vorbehalt des Fachmannes entsprang der Kenntnis, dass die Ausgestaltung eines Schneideinsatzes mit vergleichsweise großer Schlichtschneide nur dann sinnvoll ist, wenn neben dem Schlichten gleichzeitig auch die Grobzerspanung unter vergleichsweise großem Vorschub und bei großer Spantiefe erfolgt, was seinerseits die Ausbildung massiver Späne zur Folge hat und was schließendlich zu einem als nicht mehr beherrschbar erachteten Spanablaufproblem führt.

Tatsächlich wird die Forderung nach Nichtgefährdung der Werkstückoberfläche durch den ablaufenden Span mittels der erfindungswesentlichen Ausgestaltung der Schneidecke mit der, dieser nächstliegenden Noppe in nicht vorhersehbarer Weise erreicht. Die starke Abhängigkeit der Schneidergebnisse von der Orientierung der Noppenlängsstreckung in Beziehung zur Hauptschneide und ggf. auch in Bezug auf die Sehnenrichtung von Abschnitt B war für den Fachmann überraschend. Demgegenüber ist die exakte Form der Noppe und die Höhe, mit der sie über die Spanleitstufe und ggf. über den Zentralbereich der Deckfläche hinausragt, von untergeordnetem Einfluss auf das Zerspanungsergebnis, solange nur die übrigen Noppenmerkmale im Bereich der bereits zum Stand der Technik gehörenden Werte liegen. Erfindungswesentlich ist die Ausrichtung der Sehne an Abschnitt B in einem Winkel von 0 bis ±5° gegen die Werkstückachse, bzw. die Rotationsachse des Werkstücks. Dieser Winkelwert hat insofern einen festen Bezug zu den Abmessungen des Schneideinsatzes selbst, als der Schneideinsatz im Werkzeughalter unter einer zwingend vorgegeben Zustell-Sollrichtung dem Werkstück zuzustellen ist. Nur unter dieser Voraussetzung wird die vorteilhafte Wirkung und Schneidleistung erreicht. Es haben sich in der Praxis, und zwar unabhängig von Schneideinsätzen mit gleichzeitigem Einsatz von Haupt- und Nebenschneide, bereits einige wenige Anstell- bzw. Zustellwinkel als Standard-Zustellrichtung durchgesetzt, z.B. der Winkel 93°.

Der erfindungsgemäße Schneideinsatz besitzt mindestens auf einer Seite der Symmetrieebene einen Abschnitt B im Bereich der Schneidecke, also als sogenannte neutrale Ausführung einen Abschnitt B auf beiden Seiten, oder als Links-/Rechts-Ausführung eine nur einseitige Ausgestaltung von Abschnitt B. Bei der einseitigen Werkzeugausführungen kann das Werkzeug dem Werkstück nur mit der zur Symmetrieebene linken oder rechten Hauptschneide zugestellt werden. Entsprechend besitzen Links-/Rechts-Ausführungen jeweils nur eine, für die Grobzerspanung aktiv zum Einsatz kommende Hauptschneidkante. Die jeweils andere, an eine Schneidecke anschließende Schneidkante, in dieser Erfindung ebenfalls mit Hauptschneide oder Hauptschneidkante bezeichnet, dient nicht zur Grobzerspanung.

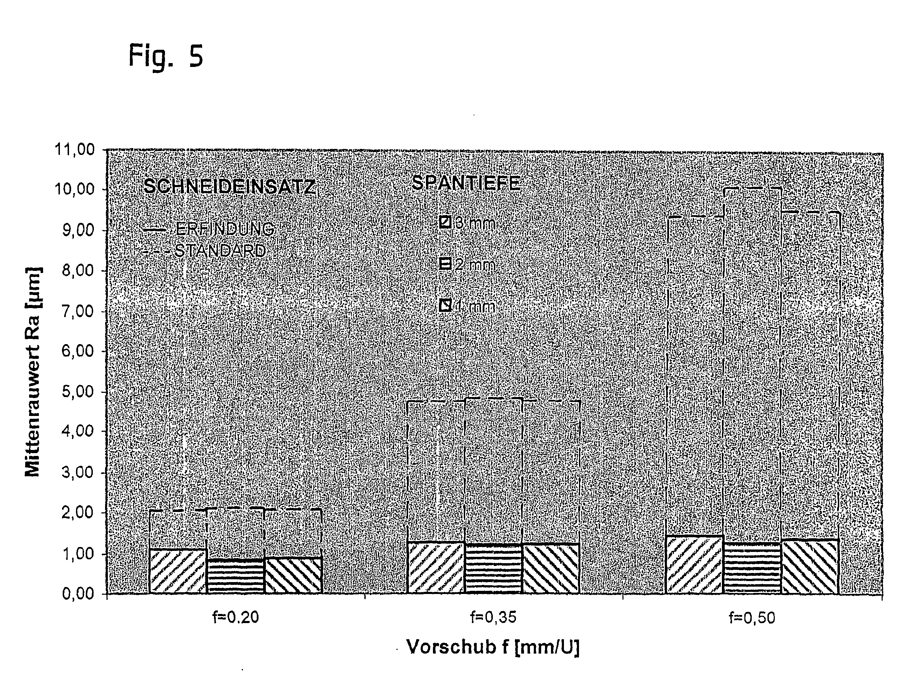

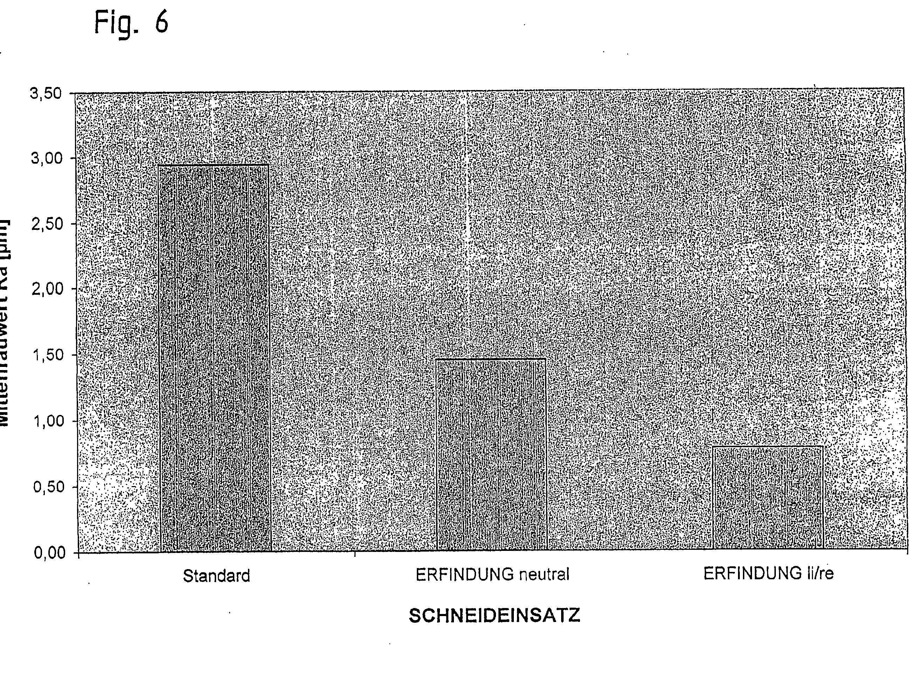

Im Falle der Links-/Rechts-Ausführung eines Schneideinsatzes lassen sich besonders lange, als Schlichtschneide funktionstüchtige Abschnitte B ausbilden. Damit ist bei vergleichsweise großer Spantiefe und großem Vorschub ein kostengünstiges, wirtschaftliches Grobzerspanen ohne Qualitätseinbuße erreichbar. Entgegen der ursprünglichen Befürchtung des Fachmannes führen übergroßer Späne bei Schneideinsätzen gemäß Erfindung nicht zu Funktionsstörungen an der Schlichtschneide und die Oberflächengüte des Werkstückes wird im Vergleich zum Arbeiten mit kleiner Spantiefe und kleinem Vorschub nicht merklich verschlechtert.
Während nach dem Stand der Technik ein Drehen unter gleichzeitigem Grob- und Schlichtschneiden mit Vorschüben von 0,3 mm/U und Spantiefen bis zu 3 mm unter dem Gesichtspunkt brauchbarer Werkstück-Oberflächengüte mit Abstrichen gerade noch als vertretbar galt, lassen sich mit Schneideinsätzen gemäß der erfindungsgemäßen Ausgestaltung laut nachfolgender Graphik selbst bei Vorschüben von bis zu 0,5 mm/U bei 1 bis 3 mm Spantiefe praktisch unveränderte Mittenrauhwerte Rₐ für die Werkstoffoberfläche erzielen. Diese liegen um ein Vielfaches besser als für vergleichbare Werkzeuge nach dem Stand der Technik. Dazu wird auf Figur 5 und 6 verwiesen.

Schneideinsätze mit linker oder rechter Schneideckenausgestaltung ergeben in diesem Ausmaß für den Fachmann nicht erwartet gute Schnittergebnisse. Doch die erfindungsgemäßen Schneideinsätze können bei nur geringfügig eingeschränktem Anwendungsumfang auch neutral ausgeführt sein, d.h. beidseitig zur Symmetrieebene einer Schneidecke eine Schlichtschneide in Form eines Abschnittes B und daran angrenzend je eine nutzbare Hauptschneidkante besitzen. In dieser Ausführung liegen die Zerspanungsleistungen in Form der maximal anwendbaren Vorschübe und Spantiefe und damit die Wirtschaftlichkeit des Drehen gegenüber der Links-Rechts-Ausführung etwas niedriger. Im Vergleich zum bekannten Stand der Technik sind die Leistungsdaten bezüglich Rauhtiefe und anwendbarer Spantiefe und Vorschub aber weiterhin sprunghaft verbessert. Figur 6 zeigt in einem Vergleich Werkstückrauhigkeiten Rₐ, erzielt mit Schneideinsätzen gemäß Stand der Technik sowie mit erfindungsgemäßen Schneideinsätzen, einmal in neutraler, das andere Mal in Links/Rechts Ausführung.

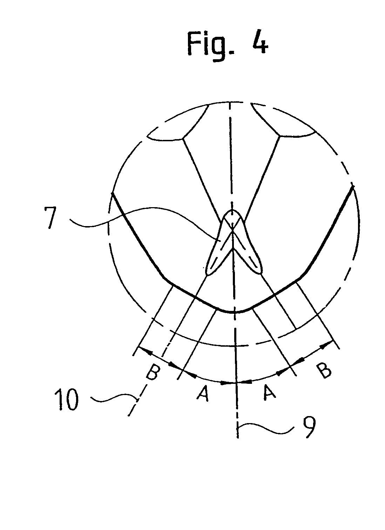

Bei erfindungsgemäßen neutralen Schneideinsatzausführung wird die der Schneidecke nächstliegende Noppe vorteilhafterweise in V-Form, etwa entsprechend Figur 4 ausgeführt. Gleichzeitig ist jeder Schenkel der V-förmigen Noppe etwa unter 90° zur Sehne an den jeweils nächstliegenden Abschnitt B ausgerichtet.

Der erfindungsgemäße Schneideinsatz eignet sich für die Zerspanung aller zerspanbaren Werkstoffe. Die erfindungswesentlichen Merkmale des Schneideinsatzes machen diesen aber besonders für das Zerspanen von Aluminium, Magnesium, Buntmetallen und nicht spröden Kunststoffen vorteilhaft verwendbar.

Die Ausgestaltung von Spanleit- und Spanformelementen in Schneideinsätzen ist in der Praxis auf die jeweilige Zerspanungsaufgabe hin ausgerichtet. Eher spröde und harte Werkstoffe bedürfen Schneideinsätze anderer Ausführungsdetails als beispielsweise zähe metallische Werkstoffe, wie Aluminium und Buntmetall oder auch gewisse Klassen von Kunststoffen. Die Mittel zur Spanführung sind daher auf den Einzelfall hin zu individualisieren. Es gibt keine allgemein gültigen Ausgestaltungsdetails.

Für die vorteilhafte Erfüllung der gestellten Aufgabe ist es unerlässlich, dass der kreisförmige oder elliptische Abschnitt B eine insgesamt nur schwache Krümmung besitzt, im Vergleich zu einem stärker gekrümmten Abschnitt A. Üblicherweise werden für den Abschnitt A Kreisradien nach ISO Standard ausgestaltet, das sind die Eckenradien 0,2, 0,4, 0,8, 1,2 oder 1, 6 mm, für nicht in einzelne Segmente unterteilte Schneidecken gemäß Stand der Technik. Bei Ausgestaltung eines Abschnittes A gemäß Erfindung mit Kreisradius r_{A} = 0,8 mm haben sich für den Abschnitt B folgende Werte praktisch bewährt:
- bei Kreisabschnitt ein Radius r = 12 x r_{A}
- bei elliptischem Abschnitt mit den Ellipsenradien r₁ und r₂: r₁ = 12 x r_{A} und r₂ = 0,3 x r_{A}

Für Abschnitt A mit Kreisradius r_{A} = 0,4 mm für Abschnitt B
- bei Kreisabschnitt ein Radius r = 6 x r_{A}
- bei elliptischem Abschnitt r₁ = 6 x r_{A} und r₂ = 0,3 x r_{A}.

Ein insgesamt bevorzugter Radienbereich für Abschnitt B ist als Unteranspruch formuliert.

Eine weitere vorteilhafte Ausführungen der Erfindung betrifft einen Schneideinsatz, bei dem der Abschnitt B in zwei, stetig aneinandergrenzende, in ihrer Krümmung unterschiedliche Unterabschnitte B₁ und B₂ unterteilt ist, wobei der Unterabschnitt B₂ an die zugehörige Hauptschneide angrenzt, und bei dem im Eckenbereich des Abschnittes B₂ eine zweite, gestreckte Noppe ausgestaltet ist, deren Streckrichtung senkrecht zur Sehne an Abschnitt B₂ ausgeführt ist. Diese erbringt in denjenigen Fällen große Vorteile, wo beim gleichzeitigen Schneiden mit der Hauptschneide und der Schlichtschneide über letztere hinausragende Schneidkantenbereiche in das Werkstück eintauchen.

Beispiele für erfindungsgemäße Schneideinsätze und Leistungsergebnisse aus damit ausgeführten Schneidtests sind in den Figuren dargestellt.
- Figur 1: zeigt einen erfindungsgemäßen Schneideinsatz in Links/Rechts-Ausführung mit einseitig angebrachter Schlichtschneide, in Aufsicht,
- Figur 2: zeigt den Schneideinsatz von Figur 1 in Seitenansicht,
- Figur 3: zeigt eine Ausschnittsvergrößerung des Bereiches BB aus Figur 1 mit den gegenüber dem Stand der Technik erfindungswesentlichen Ausgestaltungsmerkmalen,
- Figur 4: zeigt eine Ausschnittsvergrößerung gemäß Figur 1, jedoch für einen Schneideinsatz in neutraler Ausführung mit Schlichtschneide (Abschnitt B) beiderseits der Symmetrieebene,
- Figur 5: zeigt für einen erfindungsgemäßen Schneideinsatz in Links/Rechts-Ausführung die Werkstück-Rauhigkeit Rₐ eines mit dem Schneideinsatz längsgedrehten Werkstücks in Abhängigkeit vom Werkzeugvorschub f für jeweils drei verschiedene Spantiefen. Vergleichsweise sind zusätzlich die Ergebnisse aufgetragen, die mit einem bis auf die charakteristischen Erfindungsmerkmale (Schlichtschneide und Noppe) vergleichbaren Standard-Schneideinsatz erzielt wurden,
- Figur 6: zeigt die bei jeweils gleichen Schnittbedingungen erzielten Werkstück-Oberflächenrauhigkeiten Rₐ, zunächst für einen Schneideinsatz in Standardausführung gemäß Stand der Technik und in der Folge für zwei Schneideinsätze, welche die, die Erfindung charakterisierende Ausgestaltung in einem Beispiel nur in Teilmerkmalen, im zweiten Beispiel vollständig aufweisen.

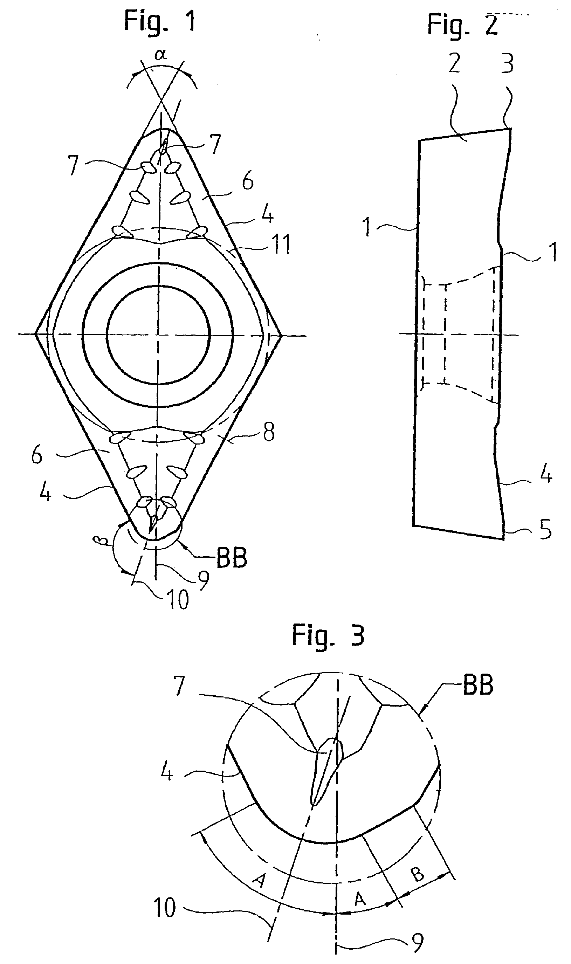

Die Erfindung wird anhand der in den Figuren dargestellten Ausführungen näher beschrieben.
Bei den Figuren 1 bis 4, besonders sichtbar in Figur 1, handelt es sich um einen Standard-Schneideinsatz der ISO Type DCGT mit Eckenwinkel α = 55°. Derartige Schneideinsätze werden entsprechend dem Stand der Technik mit konstanten Schneideckenradien, bzw. Kantenverrundungen ausgestaltet. Abweichend vom bekannten Stand der Technik ist Gegenstand vorliegender Erfindung ein Schneideinsatz mit spezifischer Ausgestaltung des Schneideckenbereiches, besonders gut sichtbar in Figur 3 für die Links-/Rechts-Ausführung und in Figur 4 für die neutrale, sowohl links als auch rechts dem Werkstück zustellbare Ausführung.

Figur 1 weist zwei gegenüberliegende Schneidecken -3- mit einem Eckenwinkel α = 55° auf. Die Symmetrieebene -9- unterteilt den Schneideinsatz in eine linke und rechte Schneideinsatzhälfte. Die Schneidkante -4,5- und die nach innen anschließende Spanleitstufe -6- sind im aktiven Schneidbereich des Schneideinsatzes umlaufend. In Figur 1 ist eine Mehrzahl von in die Spanleitstufe -6- hineinreichenden Noppen -7- dargestellt, die in Aufsicht eine Längsstreckung erkennen lassen und in ihrer Steckrichtung in der Deckfläche -1- unterschiedlich orientiert sind. Die einer Schneidecke nächstliegende Noppe -7- weist einen Orientierungswinkel von β = 135° mit der zugehörigen Hauptschneide -4- auf.

In der Seitenansicht des Schneideinsatzes nach Figur 2 ist zu erkennen, dass die Schneidkante im Schneideckenbereich waagrecht und zugleich parallel zur Schneideinsatz-Auflagefläche verläuft und im anschließenden Bereich der aktiven Hauptschneide unter konstantem Winkel in Richtung Schneideinsatz Auflagefläche (entspricht der unteren Deckfläche -1-), bzw. Richtung Kantenmitte -8- abfällt. Die Schneideinsatzkante zwischen oberer Deckfläche -1- und Seitenfläche -2- ist im vom Inkreisdurchmesser -11-bestimmten Bereich nicht als Schneidkante ausgestaltet und weist dort keine Spanleitstufe auf.
Figur 3 zeigt den vergrößerten Schneideinsatzausschnitt BB von Figur 1. Dort ist zunächst die einer Schneidecke nächstliegende, weit in die Spanleitstufe -6-hineinragende Noppe -7- mit ihrer Streckrichtung -10- zu erkennen. Beiderseits der Symmetrieebene -9- sind auf der linken und rechten Seite kreisförmig gekrümmte Schneidkantenabschnitte A ausgestaltet, wobei beide Abschnitte A gleichen Krümmungsradius aufweisen. Während der vergleichsweise längere linke Abschnitt A stetig direkt in die Hauptschneide, bzw. Hauptschneidkante -4-einmündet, geht der rechte, kürzere Abschnitt A in einen zu Abschnitt A vergleichsweise schwach gekrümmten Abschnitt B über, der seinerseits stetig in die, wegen der Schneideinsatz -Rechtsausführung nicht für eine Grobzerspanung nutzbare Hauptschneide einmündet.
Die Krümmung des als Schlichtschneide einsetzbaren Abschnittes B ist in Praxis so gering, dass die für die Winkelausrichtung des Abschnittes B maßgebende Sehne nicht getrennt von der Schneidkante sichtbar dargestellt werden kann.
Die Sehnertausrichtung ist funktionsbedingt mit 0 ± 5° auf die Werkstückachse des zu drehenden Werkstücks ausgerichtet, d.h. die vorgegebene Werkzeugzustellrichtung muss so gewählt sein, dass Werkstückachse und Sehnenrichtung gleichgerichtet sind. Andererseits ist die Krümmung des als Schlichtschneide ausgestalteten Abschnittes B derart, dass toleranzbedingte Winkelabweichungen vom Zustell-Sollwinkel die Schlichtfunktion bzw. die Qualität der Werkstückoberfläche nicht nachteilig beeinflussen.

Die entsprechend Figur 1 bis 4 ausgeführten Schneideinsätze wurden einem Zerspanungstest unterzogen und dabei mit einem in der Grundform gleichen Standard-Schneideinsatz vom Typ DCGT verglichen. Alle Schneidtests wurden unter nachfolgenden Bedingungen durchgeführt:

| | |
|---|---|
| Werkstoff: | AlCuMgPb F34-F37 |
| Festigkeit: | = 340 - 370 N/mm² |
| Werkstückdurchmesser: | = 59 mm |
| Wareneingang: | 25.09.2001 |
| Auskraglänge: | = 30 mm |
| Drehlänge: | = 25 mm |
| V_{c}: | = 400 m/min |
| Werkzeug: | SDJCL 2525 M11 |

Die Ergebnisse gemäß Fig. 5 und 6 belegen solche, gegenüber dem Stand der Technik sprunghaft verbesserte Leistungsdaten.

Zur Darstellung von Figur 6 ist anzumerken, dass beim Testschneideinsatz "Erfindung neutral" alle erfindungswesentlichen Merkmale ausgeführt sind, ausgenommen die Ausgestaltung einer erfindungsgemäßen zur Schneidecke nächstliegenden Noppe.
Im Unterschied dazu weist der Schneideinsatz, gekennzeichnet als "Erfindung li/re" sämtliche Erfindungsmerkmale auf.

Die gegenüber dem Stand der Technik nochmals sprunghaft verbesserte Oberflächengüte beim Wechsel von Ausführung "Erfindung neutral" und "Erfindung li/re" ist ein starkes Anzeichen für sich gegenseitig verstärkende und nicht nur getrennte Wirkung der charakteristischen Erfindungsmerkmale hinsichtlich Lösung der gestellten Aufgabe.

## Patentansprüche

1. Schneideinsatz zum Drehen unter, zur Werkstückachse fix vorgegebener Werkzeug-Zustellrichtung, mit oberer und unterer Deckfläche (1) und mit diese begrenzenden ebenen Seitenflächen (2), die in den Schneidecken (3) einen Eckenwinkel α ≤ 90° bilden, mit mindestens auf einer Deckfläche gerader Hauptschneidkante (4) und in den Schneidecken innerhalb einzelner Abschnitte unterschiedlich gekrümmter Eckenschneidkante (5), mit an die Schneidkante anschließender, umlaufender, zum Einsatzmittelpunkt hin abfallender Spanleitstufe (6) und mit längsgestreckten, in die Spanleitstufe hineinreichenden Noppen (7) von in der Deckfläche unterschiedlich orientierter Streckrichtung,
**dadurch gekennzeichnet,**
**dass** die Abschnitte einer jeden Eckenschneidkante (5) in Seitenansicht waagrecht sind und jede daran angrenzende Hauptschneidkante (4) einen zur Kantenmitte (8) hin abfallenden Bereich aufweist, dass, angrenzend an die Symmetrieebene (9) zu einer Schneidecke (3), die Eckenschneidkante (5) beidseitig einen kreisförmigen Abschnitt A aufweist, an den sich zumindest auf einer Seite ein kreisförmiger oder elliptischer, im Vergleich zu Abschnitt A nur schwach gekrümmter Abschnitt B einer Länge entsprechend 1,5 -15 % des Schneideinsatz-Inkreisdurchmesser (11) stetig anschließt, welcher Abschnitt B seinerseits stetig in die gerade Hauptschneidkante (4) einmündet, wobei die Sehne an den kreisförmigen oder elliptischen Abschnitt B unter einem Winkel 0 - ± 5° gegen die vorgegebene Richtung für die Werkstückachse ausgerichtet ist und dass die Streckrichtung der einer Schneidecke nächstliegende Noppe (7) mit der zugehörigen Hauptschneidkante (4) einen Winkel β =110° - 160° einschließt.

2. Schneideinsatz zum Drehen nach Anspruch 1, **dadurch gekennzeichnet, dass** dieser einen kreisförmigen oder elliptischen Abschnitte B beiderseits der Symmetrieebene besitzt und dass die der Schneidecke nächstliegende Noppe etwa V-förmig ausgestaltet ist mit zwei Streckrichtungen senkrecht zur jeweils nächstliegenden der beiden Sehnen an die Abschnitte B.

3. Schneideinsatz zum Drehen nach Anspruch 1 oder 2, **dadurch gekennzeichnet, dass** die Eckenschneidkante einen kreisförmigen Abschnitt A vom Radius r_{A} = 0,2 -1,6 mm besitzt, an den sich ein Abschnitt B mit Radius r = 5 -12 x r_{A} oder alternativ der flache Kurventeil einer Ellipse mit den Ellipsenradien r₁ und r₂ mit r₁ = 5 - 12 x r_{A} und r₂ = 0,2 - 0,6 x r_{A} anschließt.

4. Schneideinsatz nach Anspruch 1 - 3, **dadurch gekennzeichnet, dass** der Winkel β = 130° - 140° beträgt.

5. Schneideinsatz nach Anspruch 1 - 4, **dadurch gekennzeichnet, dass** die Länge von Abschnitt B 5 -10 % des Inkreisdurchmessers beträgt.

6. Schneideinsatz zum Drehen nach einem der vorigen Ansprüche 1 und 4 - 5, **dadurch gekennzeichnet, dass** im Fall der einseitigen Ausgestaltung von Abschnitt B bezüglich Symmetrieebene der Abschnitt B in zwei, stetig aneinandergrenzende, in ihrer Krümmung unterschiedliche Unterabschnitte B₁ und B₂ unterteilt ist, wobei der Unterabschnitt B₂ an die zugehörige Hauptschneidkante angrenzt, und dass der Schneideinsatz im Eckenbereich des Unterabschnitts B₂ eine zweite, gestreckte Noppe aufweist, deren Streckrichtung senkrecht zur Sehne an den Unterabschnitt B₂ liegt.

## Claims

1. Cutting insert for turning with a tool feed direction which is prefixed relative to the workpiece axis, with a top and a bottom cover face (1) and with plane side faces (2) which bound the latter and form a corner angle a ≤ 90° in the cutting corners, with a straight main cutting edge (4) at least at one cover face and, in the cutting corners within individual portions, a corner cutting edge of different curvature with an all-round deflection shoulder (6) adjoining the cutting edge and sloping towards the centre point of the insert, and with elongate protuberances (7) reaching into the deflection shoulder and extending in a direction which is oriented differently in the cover face,
**characterised in**
**that** the portions of each corner cutting edge (5) are horizontal in a side view and each main cutting edge (4) adjacent thereto comprises a region which slopes towards the edge centre (8), that, adjacent to the plane of symmetry (9) relative to a cutting corner (3), the corner cutting edge (5) comprises on both sides a circular portion A which is continuously adjoined at least on one side by a circular or elliptical portion B having just a slight curvature in comparison with the portion A and a length corresponding to 1.5 - 15% of the cutting insert incircle diameter (11), which portion B in turn leads constantly into the straight main cutting edge (4), wherein the chord to the circular or elliptical portion B is oriented at an angle of 0 - ± 5° with respect to the predetermined direction for the workpiece axis, and that the direction in which the protuberance (7) lying nearest to a cutting corner extends forms an angle β = 110° - 160° with the associated main cutting edge (4).

2. Cutting insert for turning according to Claim 1, **characterised in that** this has a circular or elliptical portion B on both sides of the plane of symmetry, and that the protuberance lying nearest to the cutting corner is approximately V-shaped with two directions extending perpendicularly to the respective nearest of the two chords to the portions B.

3. Cutting insert for turning according to Claim 1 or 2, **characterised in that** the corner cutting edge has a circular portion A of the radius r_{A} = 0.2 to 1.6 mm which is adjoined by a portion B with the radius r = 5 - 12 x r_{A} or, alternatively, the flat curve part of an ellipse with the ellipse radii r₁ and r₂ with r₁ = 5 - 12 x r_{A} and r₂ = 0.2 - 0.6 x r_{A}.

4. Cutting insert according to Claims 1 - 3, **characterised in that** the angle β = 130° to 140°.

5. Cutting insert according to Claims 1 - 4, **characterised in that** the length of the portion B is 5 - 10% of the incircle diameter.

6. Cutting insert for turning according to any one of the preceding Claims 1 and 4 - 5, **characterised in that** when the portion B is formed on one side relative to the plane of symmetry the portion B is divided into two, constantly adjacent sub-portions B₁ and B₂ of different curvature, wherein the sub-portion B₂ is adjacent to the associated main cutting edge, and that the cutting insert comprises a second, elongate protuberance in the corner region of the sub-portion B₂ which extends in a direction perpendicular to the chord to the sub-portion B₂.

## Revendications

1. Plaquette de coupe pour tournage dans une direction d'avance de l'outil prédéfinie de façon fixe par rapport à l'axe de la pièce à usiner, qui comprend des surfaces d'enveloppes supérieure et inférieure (1) et des parois latérales planes (2) qui les limitent et forment un angle de coin α ≤ 90 degrés dans les coins de coupe (3), ainsi qu'au moins une arête de coupe principale rectiligne (4) sur une surface d'enveloppe et une arête de coupe (5) de coin à courbures différentes à l'intérieur de segments individuels dans les angles de coupe, ainsi qu'un gradin périphérique (6) de guidage des copeaux qui se raccorde à l'arête de coupe et descend en direction du centre de la plaquette, et ainsi que des boutons allongés (7) qui pénètrent dans le gradin de guidage de copeaux et s'étendent dans des directions d'orientations différentes dans la surface d'enveloppe,
**caractérisée en ce que** les segments de chaque arête de coupe (5) de coin sont horizontaux en vue de côté et chaque arête de coupe principale (4) qui y est adjacente présente une zone descendant en direction du milieu (8) d'arête, **en ce que** l'arête de coupe (5) de coin présente sur chaque côté un segment circulaire A qui est adjacent au plan de symétrie (9) d'un coin de coupe (3) et auquel se raccorde de façon continue au moins sur un côté un segment circulaire ou elliptique B, qui n'est que faiblement incurvé par rapport au segment A et dont la longueur correspond à 1,5 à 15% du diamètre (11) du cercle inscrit de la plaquette de coupe, ledit segment B débouchant quant à lui de façon continue dans l'arête de coupe principale rectiligne (4), et la corde du segment circulaire ou elliptique B étant orientée selon un angle de 0 ± 5 degrés par rapport à la direction prédéfinie pour l'axe de la pièce à usiner, et **en ce que** l'orientation dans laquelle s'étend le bouton (7) le plus voisin d'un coin de coupe forme un angle β = 110 degrés à 160 degrés avec l'arête de coupe principale associée (4).

2. Plaquette de coupe de tournage selon la revendication 1, **caractérisée en ce qu'**elle comprend deux segments circulaires ou elliptiques B, un sur chaque côté du plan de symétrie, et **en ce que** la structure du bouton le plus voisin du coin de coupe forme approximativement un V dont les deux directions s'étendent perpendiculairement aux deux cordes respectivement les plus proches sur les segments B.

3. Plaquette de coupe de tournage selon la revendication 1 ou 2, **caractérisée en ce que** l'arête de coupe de coin possède un segment circulaire A d'un rayon r_{A} = 0,2 à 1,6 mm, auquel se raccorde un segment B d'un rayon r = 5 - 12 x r_{A} ou en variante la partie incurvée plate d'une ellipse dont les rayons r₁ et r₂ d'ellipse sont de r₁ = 5 - 12 x r_{A} et r₂ = 0,2 - 0,6 r_{A}.

4. Plaquette de coupe selon l'une des revendications 1 à 3, **caractérisée en ce que** l'angle β est de 130 à 140 degrés.

5. Plaquette de coupe selon l'une quelconque des revendications 1 à 4, **caractérisée en ce que** la longueur du segment B est égale à 5 à 10% du diamètre de cercle inscrit.

6. Plaquette de coupe de tournage selon la revendication 1 ou l'une des revendications 4 et 5, **caractérisée en ce que** le segment B est divisé, si le segment B est configuré d'un seul côté du plan de symétrie, en deux sous-segments B₁ et B₂, adjacents l'un à l'autre de façon continue, de courbures différentes, le sous-segment B₂ étant adjacent à l'arête de coupe principale associée, et **en ce que** la plaquette de coupe comporte, dans la zone de coin du sous-segment B₂, un deuxième bouton qui s'étend dans la direction perpendiculaire à la corde du sous-segment B₂.
